# EUROPÄISCHE PATENTSCHRIFT

(11) **EP 2 492 701 B1**
(45) Veröffentlichungstag und Bekanntmachung des Hinweises auf die Patenterteilung: **05.09.2018**
(21) Anmeldenummer: 11156223.7
(22) Anmeldetag: 28.02.2011
(51) Int. Cl.: F03D 17/00

(54) **Verfahren und Vorrichtung zum Testen einer Windturbinenanlage**
Method and device for testing a wind turbine assembly
Procédé et dispositif destinés au test d'une éolienne

(43) Veröffentlichungstag der Anmeldung: 29.08.2012
(73) Patentinhaber: Siemens Aktiengesellschaft, 80333 München (DE)
(72) Erfinder: Dreyer, Thomas, 28832 Achim (DE); Siepker, Tobias, 48499 Salzbergen (DE)

(56) Entgegenhaltungen:
- WO-A1-2007/140789
- WO-A2-2008/074324
- SEMAN S ET AL: "Low voltage ride-through analysis of 2 MW DFIG wind turbine - grid code compliance validations", POWER AND ENERGY SOCIETY GENERAL MEETING - CONVERSION AND DELIVERY OF ELECTRICAL ENERGY IN THE 21ST CENTURY, 2008 IEEE, IEEE, PISCATAWAY, NJ, USA, 20. Juli 2008 (2008-07-20), Seiten 1-6, XP031304475, ISBN: 978-1-4244-1905-0
- GOMEZ-LAZARO E ET AL: "Characterization of Measured Voltage Dips in Wind Farms in the Light of the New Grid Codes", POWER TECH, 2007 IEEE LAUSANNE, IEEE, PISCATAWAY, NJ, USA, 1. Juli 2007 (2007-07-01), Seiten 2059-2064, XP031269696, ISBN: 978-1-4244-2189-3

## Beschreibung

Die vorliegende Erfindung betrifft ein Verfahren und eine Vorrichtung zum Testen einer Windturbinenanlage im Hinblick auf das Durchfahren eines Spannungseinbruchs.

Wenn Windturbinenanlagen an ein Stromnetz angeschlossen werden, müssen sie bestimmte Anforderungen erfüllen. Diese Anforderungen sind in sogenannten grid codes festgelegt, in denen für definierte Größen Verhaltensvorgaben enthalten sind, die die Windturbinenanlage einhalten muss. Beispielsweise ist in den meisten grid codes auch vorgeschrieben, dass die Windturbinenanlage in der Lage sein muss, bestimmte Spannungseinbrüche im Netz durchfahren zu können, ohne dass die Windturbinenanlage vom Netz genommen werden muss.

Für das Integrieren einer Windturbinenanlage in ein Netz ist daher zu überprüfen, ob alle in den grid codes vorgeschriebenen Verhaltensvorgaben eingehalten werden. Daher werden heutzutage alle Neuentwicklungen von Windturbinenanlagen und teilweise auch alte Windturbinenanlagen in Bezug auf die Netzintegration/Netzanforderungen diversen Messungen unterzogen, um die Einhaltung der Verhaltensvorgaben zu überprüfen. Ein Teil dieser Überprüfung betrifft auch die Fähigkeit der Windturbinenanlage, einen Spannungseinbruch zu durchfahren und das Netz durch Blindleistungsbereitstellung zu stützen. Diese Tests, die entweder vom Hersteller selbst oder von externen Anbietern durchgeführt werden, umfassen neben dem Aufnehmen der Messdaten eine umfangreiche Nachbearbeitung, in welcher die Messdaten verwaltet, dokumentiert, verarbeitet, dargestellt und bewertet werden. Die Nachbearbeitung mündet dann in umfangreiche Berichte.

WO 2008/074324 A2 beschreibt ein Verfahren zum Durchführen eines Funktionstests eines eingebetteten Subelementes einer Windturbine. Im Rahmen des Funktionstests wird ein vorbestimmtes Ereignismuster ausgeführt, welches das Subelement der Windturbine aktiviert. Auf der Basis von Messungen des Subelementes werden Messdaten für das vordefinierte Ereignismuster gewonnen, die dann mit vorgegebenen Referenzdaten in Beziehung gesetzt werden, um ein Testergebnis zu erzeugen, das darauf basierend den Zustand des eingebetteten Unterelementes wiedergibt. Das vordefinierte Ereignismuster wird dabei von einem Testalgorithmus durchgeführt, der den Steueralgorithmus der Windturbinensteuerung zumindest teilweise überschreibt.

S. Seman et al. beschreiben in "Low Voltage Ride-Through Analysis of 2 MW DFIG Wind Turbine - Grid Code Compliance Validations" in 2008 IEEE, IEEE, Piscataway, NJ USA, 20. Juli 2008, Seite 1 bis 6 ein Simulationsmodel, anhand dessen das Durchfahren eines Spannungseinbruches mit einer Wind Turbine an einem Model simuliert werden kann. Das Simulationsmodel wurde anhand eines Feldtests, in dem ein Spannungseinbruch simuliert worden ist, validiert.

E. Gómez-Lázaro et al. beschreiben in "Characterization of Measured Voltage Dips in Wind Farms in the Light of the New Grid Codes", PowerTech 2007 IEEE, Lozan IEEE, Piscataway, NJ USA, 1. Juli 2007, Seiten 2059 bis 2064 die Ergebnisse von Messungen von Spannungseinbrüchen, die mit Hilfe zweier Analysatoren, die über Monate in einem spanischen Windpark installiert waren, gemessen wurden. Anhand der gemessenen Daten wurden die Spannungseinbrüche charakterisiert.

WO 2007/140789 A1 beschreibt ein Testsystem für Windturbinen zum Testen von Gondelkomponenten, welches ein System zur Netzsimulation aufweist.

Gegenüber diesem Stand der Technik ist es Aufgabe der vorliegenden Erfindung, ein vorteilhaftes Verfahren sowie eine vorteilhafte Vorrichtung zum Testen einer Windturbinenanlage im Hinblick auf das Durchfahren eines Spannungseinbruchs zur Verfügung zu stellen.

Diese Aufgabe wird durch ein Verfahren nach Anspruch 1 bzw. eine Testvorrichtung nach Anspruch 5 gelöst. Die abhängigen Ansprüche enthalten vorteilhafte Ausgestaltungen der Erfindung.

In dem erfindungsgemäßen Verfahren zum Testen einer Windturbinenanlage im Hinblick auf das Durchfahren eines Spannungseinbruchs wird ein Spannungseinbruch simuliert. Anhand des simulierten Spannungseinbruchs werden Messdaten über das Verhalten der Windturbinenanlage gewonnen und im Hinblick auf in Verhaltensvorgaben (grid codes) definierte Größen und deren zulässigen Werte analysiert. Dabei werden die Messdaten zu einem Messdatensatz in einem standardisierten Messdatenformat zusammengefasst und dieser dann an eine automatische Analyseeinheit weitergegeben. In der automatischen Analyseeinheit werden aus den Messdaten Werte für die in den Verhaltensvorgaben definierten Größen abgeleitet und die abgeleiteten Werte mit den in den Verhaltensvorgaben enthaltenen zulässigen Werten verglichen. Es wird zudem eine Bewertung des Vergleiches nach Bewertungskriterien vorgenommen, die in der Analyseeinheit vorgehalten werden, und das Ergebnis der Bewertung zur Ausgabe bereit gehalten, vorzugsweise in einer standardisierten Form. Die vorgehaltenen Bewertungskriterien können entweder den Verhaltungsvorgaben entnommen sein oder vom Hersteller oder Zertifizierer der Windturbine festgelegt sein. Im letzteren Fall können die Bewertungskriterien insbesondere schärfer als in einem grid code sein, beispielsweise wenn die Windturbine mehrere unterschiedliche grid codes erfüllen soll und daher für jede definierte Größe das strengste Bewertungskriterium der beiden grid codes herangezogen werden muss.

Das erfindungsgemäße Verfahren ermöglicht insbesondere durch das Vorhalten von Bewertungskriterien in der Analyseeinheit das vollständige Automatisieren des Tests im Hinblick auf das Durchfahren eines Spannungseinbruchs. Auf diese Weise kann das Nachbearbeiten gegenüber dem heutzutage angewendeten manuellen Nachbearbeiten beschleunigt und systematisiert werden. Durch die Zeitersparnis ist eine schnellere Aussage, ob ein Test nach entsprechenden Vorgaben bestanden wurde, als bei einer manuellen Nachbearbeitung möglich. Zudem wird durch die Automatisierung die Reproduzierbarkeit der Ergebnisse erhöht. Weiterhin können Kosten reduziert werden, weil die Mitarbeiter nicht so intensiv in die Nachbearbeitung der Messdaten, insbesondere in die Bewertungskriterien, eingearbeitet werden müssen, da die Nachbearbeitung vollständig von der Analyseeinheit durchgeführt wird. Dies spart Zeit und Ressourcen. Zudem kann die Software zum manuellen Analysieren der Messdaten eingespart werden, was ebenfalls zu einer Kostenreduktion führt.

Die automatische Analyseeinheit leitet aus dem Messdatensatz insbesondere Werte für zumindest eine der folgenden Größen ab:
- Dauer des Spannungseinbruchs
- Tiefe des Spannungseinbruchs
- Dauer der Wirkleistungswiederkehr auf 90%
- Dauer der Wirkleistungswiederkehr auf 95%
- Blindstrom im Spannungseinbruch
- maximale Leistungsaufnahme der Windturbinenannahme
- Wirkleistung während des Spannungseinbruchs
- k-Faktor (Verhältnis zwischen Leitungs- und Erdimpedanz)
- irreactive recovertime (Erholungszeit ohne Blindstrom).

Zusätzlich zu dem Bewerten des Vergleichs der aus den Messdaten abgeleiteten Werte der Größen mit den in den Verhaltensvorgaben enthaltenen zulässigen Werten kann die Analyseeinheit aus dem Messdatensatz den Status der Windturbinenanlage ableiten. Weiterhin besteht die Möglichkeit, anhand des Messdatensatzes außerdem automatisiert eine Dokumentationstabelle zu erstellen. Auch dies führt gegenüber dem Erstellen einer Dokumentationstabelle von Hand zu einer Zeitersparnis und zu reproduzierbaren Ergebnissen.

Eine erfindungsgemäße Testvorrichtung zum Testen einer Windturbinenanlage mit einem Steuersystem im Hinblick auf das Durchfahren eines Spannungseinbruchs umfasst zumindest eine Messdatenerfassungseinheit, einen Messdatenkonverter und eine Analyseeinheit. Die Messdatenerfassungseinheit weist eine Schnittstelle zum Anschluss an das Steuersystem der Windturbinenanlage auf und ist zum Erfassen aller oder ausgewählter Messdaten des Steuerungssystems ausgelegt. Mit der Messdatenerfassungseinheit ist der Messdatenkonverter zum Empfang der erfassten Messdaten verbunden. In dem Messdatenkonverter werden die erfassten Messdaten zu einem standardisierten Messdatensatz zusammengefasst. Die Analyseeinheit ist mit dem Messdatenkonverter zum Empfang des Messdatensatzes verbunden. Sie weist einen Regelspeicher, einen Vorgabenspeicher und einen Kriterienspeicher auf, die als physikalisch getrennte Speicher oder als logische Bereiche eines einzigen physikalischen Speichers ausgebildet sein können. In dem Regelspeicher sind Berechnungsregeln für das Berechnen der Werte bestimmter Größen aus dem Messdatensatz abgelegt, der Vorgabenspeicher enthält die für die bestimmten Größen zulässigen Werte, und der Kriterienspeicher enthält Bewertungskriterien für das Bewerten eines Vergleiches der berechneten Werte mit den zulässigen Werten. Die Analyseeinheit ist dazu ausgestaltet, nach einem automatisiertem Schema aus dem Messdatensatz Werte für die in den Verhaltensvorgaben definierten Größen abzuleiten, die abgeleiteten Werte mit den in den Verhaltensvorgaben enthaltenen zulässigen werten zu vergleichen, eine Bewertung des Vergleichs nach vorgegebenen Kriterien vorzunehmen und das Ergebnis der Bewertung zur Ausgabe bereit zu halten, bspw. in einer standardisierten Form. Hierzu weist die Analyseeinheit eine mit den Messdatenkonverter und dem Regelspeicher verbundene Berechnungseinheit auf, die aus dem Messdatensatz Werte für die bestimmten Größen ableitet. Mit der Berechnungseinheit ist eine Vergleichseinheit verbunden, die außerdem mit dem Vorgabenspeicher verbunden ist. In der Vergleichseinheit werden die aus dem Messdatensatz abgeleiteten Werte der bestimmten Größen mit den im Vorgabenspeicher enthaltenen zulässigen Werten verglichen. Weiterhin weist die Analyseeinheit eine Bewertungseinheit auf, die mit der Vergleichseinheit und den Kriterienspeicher verbunden ist, eine Bewertung des Vergleiches nach den Bewertungskriterien vornimmt und das Ergebnis der Bewertung vorzugsweise in einer standardisierten Form zur Ausgabe bereit hält. Optional kann die erfindungsgemäße Vorrichtung außerdem eine mit der Bewertungseinheit zum Empfang der ausgegebenen Bewertung verbundene Darstellungseinheit zur Darstellung der empfangenen Bewertung umfassen.

Mit der erfindungsgemäßen Testvorrichtung lässt sich das erfindungsgemäße Verfahren zum Testen einer Windturbinenanlage automatisiert durchführen. Es werden daher mit der erfindungsgemäßen Testvorrichtung die mit Bezug auf das erfindungsgemäße Verfahren beschriebenen Vorteile verwirklicht.

Darüber hinaus kann die erfindungsgemäße Testvorrichtung wenigstens eine der folgenden Einheiten aufweisen, um den Testablauf dokumentieren zu können.

Eine Dokumentationseinheit, die mit der Analyseeinheit, insbesondere mit deren Bewertungseinheit, zum Empfang der ausgegebenen Bewertung vorzugsweise zusammen mit den Bewertungskriterien, verbunden ist und die die empfangene Bewertung ggf. zusammen mit den Bewertungskriterien speichert.

Eine Protokolliereinheit, die mit der Analyseeinheit, insbesondere mit deren Berechnungseinheit, zum Empfang der aus dem Messdatensatz abgeleiteten Größen sowie deren Werte, vorzugsweise zusammen mit den Berechnungsregeln, verbunden ist und die die empfangenen Größen sowie deren Werte ggf. zusammen mit den Berechnungsregeln protokolliert.

Eine Messdatenprotokolliereinheit, die mit der Messdatenerfassungseinheit zum Empfang der Messdaten verbunden ist und die die empfangenen Messdaten protokolliert.

Eine Messdatensatzprotokolliereinheit, die mit dem Messdatenkonverter zum Empfang des Messdatensatzes verbunden ist und die den empfangenen Messdatensatz protokolliert.

Die genannten Protokolliereinheiten müssen nicht als gegenständlich getrennte Einheiten vorliegen, sondern können auch als logische Untereinheiten einer einzigen Protokolliereinheit ausgeführt sein.

Im Interesse einer möglichst vollständigen Dokumentation des Testvorgangs ist es vorteilhaft, wenn sowohl die Dokumentationseinheit, die Protokolliereinheit, die Messdatenprotokolliereinheit und die Messdatensatzprotokolliereinheit vorhanden sind.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren:
Figur 1 zeigt ein erstes Ausführungsbeispiel für die erfindungsgemäße Testvorrichtung.
Figur 2 zeigt die Analyseeinheit der Testvorrichtung.
Figur 3 zeigt eine Abwandlung des ersten Ausführungsbeispiels.
Figur 4 zeigt die automatische Prozesssteuerung im erfindungsgemäßen Verfahren zum Testen einer Windturbinenanlage.
Figur 5 zeigt die automatische Analyse eines Messdatensatzes.

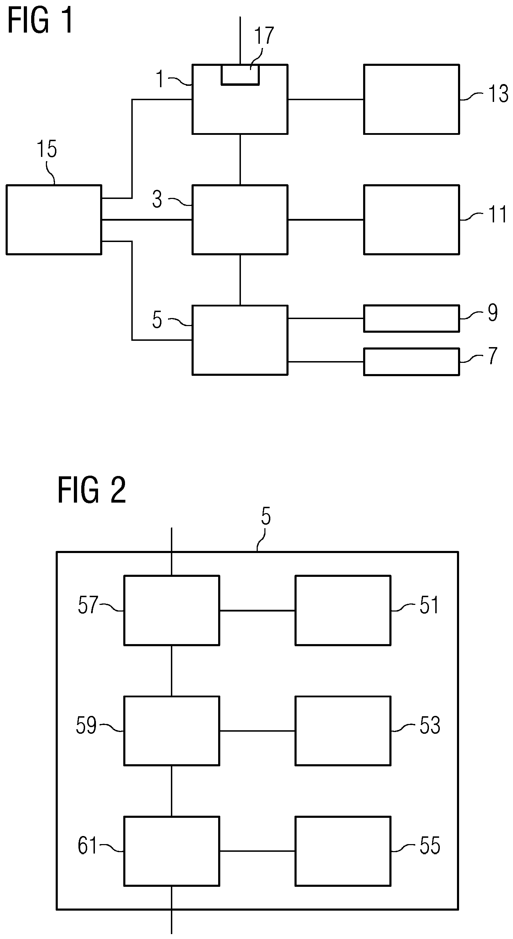

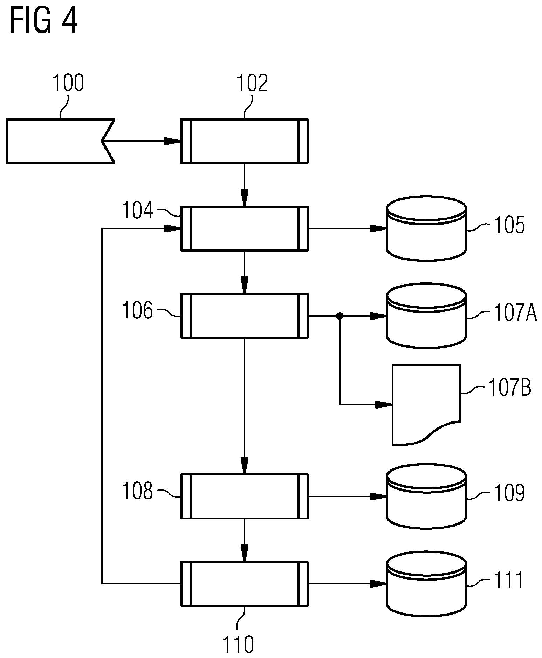

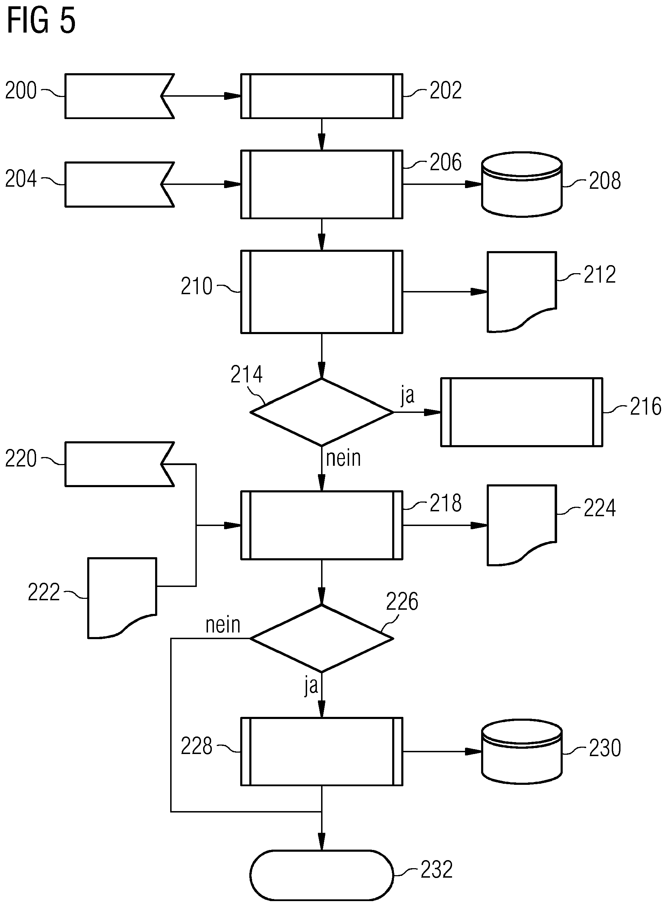

Nachfolgend wird mit Bezug auf die Figuren 1 bis 3 die erfindungsgemäße Testvorrichtung zum Testen einer Windturbinenanlage beschrieben, bevor dann mit Bezug auf die Figuren 4 und 5 das Testverfahren beschrieben wird.

Figur 1 zeigt ein Ausführungsbeispiel für eine erfindungsgemäße Vorrichtung zum Testen einer Windturbinenanlage mit einer Messdatenerfassungseinheit 1, einem Messdatenkonverter 3 und einer Analyseeinheit 5. Darüber hinaus umfasst die Vorrichtung optionale Module, nämlich eine mit der Analyseeinheit verbundene Dokumentationseinheit 7, eine ebenfalls mit der Analyseeinheit verbundene Protokolliereinheit 9, eine mit dem Messdatenkonverter 3 verbundene MessdatensatzProtokolliereinheit 11 sowie eine mit der Messdatenerfassungseinheit 1 verbundene Messdatenprotokolliereinheit 13. Im vorliegenden Ausführungsbeispiel umfasst die Vorrichtung außerdem eine Darstellungseinheit 15, mit dem das Ergebnis des Tests dargestellt werden kann. Die Darstellungseinheit 15 kann beispielsweise im einfachsten Fall ein Monitor oder ein Drucker sein, typischerweise wird sie aber in Form eines PC realisiert sein. Wenn sie als PC realisiert ist, kann sie gleichzeitig auch als Eingabe- und Bedieneinheit für Testvorrichtung fungieren, wie dies im vorliegenden Ausführungsbeispiel der Fall ist.

Die Messdatenempfangseinheit 1 weist eine Schnittstelle 17 zum Anschluss an das Steuersystem einer Windturbinenanlage auf. Über die Schnittstelle 17 können vom Steuersystem der Windturbinenanlage ausgewählte Messdaten abgerufen werden. Das Konfigurieren der Messdatenempfangseinheit 1 im Hinblick auf das anzusprechende Steuersystem erfolgt über die Bedieneinheit 15. Hierüber können insbesondere IP-Adressen und Benutzerdaten des anzusprechenden Steuersystems eingegeben werden.

Die Verbindung mit dem Steuersystem kann entweder über eine direkte kabelgebundene oder drahtlose Verbindung erfolgen, über ein lokales Netz (LAN) oder grundsätzlich auch über das Internet.

Die Messdatenempfangseinheit 1 ist mit dem Messdatenkonverter 3 verbunden. Dieser empfängt von der Messdatenempfangseinheit 1 die vom Steuerungssystem der Windturbinenanlage abgerufenen Messdaten und generiert Messdatensätze in einem vorgegebenen Format. Ein häufig für solche Messdatensätze verwendetes Format ist das sogenannte FAMOS-Datenformat, das auch im vorliegenden Fall zur Anwendung kommen kann.

Außer mit der Messdatenempfangseinheit ist der Messdatenkonverter 3 auch mit der Analyseeinheit 5 verbunden, an die er die erstellten Messdatensätze ausgibt. In der Analyseeinheit erfolgt eine Analyse der Messdatensätze in mehreren Schritten. Zuerst werden aus den in einem Messdatensatz enthaltenen Messdaten, welche das Verhalten der Windturbinenanlage beim Durchfahren eines simulierten Spannungseinbruchs repräsentieren, Werte für die in den Verhaltensvorgaben (grid codes) definierten Größen abgeleitet. Diese Größen werden dann mit den in den Verhaltensvorgaben enthaltenen zulässigen Wertebereichen verglichen und es wird eine Bewertung des Vergleiches nach vorgegebenen Kriterien vorgenommen. Solche Kriterien können beispielsweise im einfachsten Fall zu der bloßen Aussage führen, dass der Wertebereich eingehalten oder nicht eingehalten ist. Es sind aber auch komplexere Bewertungskriterien möglich, die etwa auch berücksichtigen, ob der aus den Messdatensatz abgeleitete Wert an den Grenzen des zulässigen Wertebereiches oder in der Mitte des zulässigen Wertebereiches liegt. Darüber hinaus ist es auch möglich, das Kriterium für eine Größe vom Ergebnis des Vergleiches anderer Größen mit den für diese anderen Größen vorgegebenen Wertebereichen zu berücksichtigen. So kann beispielsweise der zulässige Wertebereich für eine bestimmte Größe davon abhängen, welchen Wert eine andere Größe aufweist.

Nachdem die Bewertung des Vergleiches nach vorgegebenen Kriterien vorgenommen ist, wird im vorliegenden Ausführungsbeispiel das Ergebnis der Bewertung in eine standardisierte Form gebracht und von der Analyseeinheit 5 zur Ausgabe bereit gehalten.

Die Struktur der Analyseeinheit ist schematisch in Figur 2 dargestellt. Sie umfasst im vorliegenden Ausführungsbeispiel drei Speicher, nämlich einen Regelspeicher 51, einen Vorgabenspeicher 53 und einen Kriterienspeicher 55. In dem Regelspeicher 51 sind vorgegebene Größen sowie Berechnungsregeln für das Berechnen der Werte dieser Größen aus dem Messdatensatz abgelegt. Die vorgegebenen Größen und die Berechnungsregeln können sich aus den grid codes oder aus anderen Verhaltensvorgaben für die Windturbinenanlage ergeben. Sie können bspw. über den PC 15 in den Regelspeicher 51 geschrieben werden.

Im Vorgabenspeicher 53 sind die gemäß den Verhaltensvorgaben zulässigen Werte für die vorgegebenen Größen gespeichert. Die zulässigen Werte können bspw. über den PC 15 in den Vorgabenspeicher 53 geschrieben werden.

Der Kriterienspeicher enthält Bewertungskriterien, anhand derer ein Vergleich der aus dem Messdatensatz berechneten Werte der vorgegebenen Größen mit den im Vorgabespeicher 53 abgeleiteten zulässigen Werten erfolgen kann.

Die Analyseeinheit 5 weist außerdem eine Berechnungseinheit 57 auf, die zum Empfang des Messdatensatzes mit dem Messdatenkonverter 3 und zum Empfang der vorgegebenen Größen sowie der zugehörigen Berechnungsregeln mit dem Regelspeicher 51 verbunden ist. In ihr werden aus dem Messdatensatz die Werte für die vorgegebenen Größen berechnet.

Mit der Berechnungseinheit 57 ist eine Vergleichseinheit 59 verbunden.

Darüber hinaus ist die Vergleichseinheit 59 mit dem Vorgabenspeicher 53 verbunden. In der Vergleichseinheit 59 erfolgt der Vergleich der für die vorgegebenen Größen berechneten Werte mit den im Vorgabenspeicher 53 enthaltenen zulässigen Werten.

In der Analyseeinheit 5 ist zudem eine Bewertungseinheit 61 vorhanden, die mit der Vergleichseinheit 59 zum Empfang des Vergleichsergebnisses und mit dem Kriterienspeicher 55 zum Empfang der Bewertungskriterien verbunden ist und die das Vergleichsergebnis aus der Basis der Bewertungskriterien bewertet.

Das Bewertungsergebnis wird im vorliegenden Ausführungsbeispiel dann von der Bewertungseinheit 61 in eine standardisierte Form gebracht und aus der Analyseeinheit 5 ausgegeben.

Der im vorliegenden Ausführungsbeispiel sowohl die Bedieneinheit als auch die Darstellungseinheit repräsentierende PC 15 ist mit der Messdatenempfangseinheit 1, mit dem Messdatenkonverter 3 und der Analyseeinheit 5 verbunden. Über ihn können beispielsweise die Kriterien zum Bewerten des Vergleiches in die Analyseeinheit 5 eingegeben werden. Ebenso ist es möglich über den PC 15 eine Formatvorgabe für das Erstellen der Messdatensätze in den Messdatenkonverter 3 einzugeben.

Im vorliegenden Ausführungsbeispiel sind zudem eine Dokumentationseinheit 7 und eine Protokolliereinheit 9 mit der Analyseeinheit 5 verbunden. Während die Dokumentiereinheit 7 von der Analyseeinheit 5 das Bewertungsergebnis empfängt und zu Dokumentationszwecken speichert, empfängt die Protokolliereinheit 9 die aus dem Messdatensatz abgeleiteten Größen zusammen mit deren Werten. Die Protokolliereinheit empfängt im vorliegenden Ausführungsbeispiel außerdem die Berechnungsregeln, nach denen die Werte der abgeleiteten Größen berechnet werden. Beides wird zusammen in eine Protokolldatei abgespeichert.

Die Dokumentiereinheit 7 empfängt im vorliegenden Ausführungsbeispiel außerdem die Bewertungskriterien nach denen der Vergleich der Größen mit den zulässigen Werten bewertet wird. Beides wird in einer Dokumentationsdatei abgespeichert. Wenn die Bewertungskriterien fest vorgegeben sind, kann ggf. auf das Dokumentieren der verwendeten Kriterien verzichtet werden.

Auch der Messdatenkonverter 3 ist mit einer Protokolliereinheit, nämlich der Messdatensatzprotokolliereinheit 11 verbunden. Diese Protokolliereinheit empfängt vom Messdatenkonverter den erzeugten Messdatensatz und speichert ihn in einer Protokolldatei.

Ebenso ist die Messdatenerfassungseinheit 1 mit einer Protokolliereinheit verbunden, nämlich mit der Messdatenprotokolliereinheit 13. Diese empfängt von der Messdatenerfassungseinheit 1 die vom Steuerungssystem der Windturbinenanlage abgerufenen Messdaten in ihrer Rohform und speichert sie in einer Protokolldatei. Darüber hinaus kann es vorteilhaft sein, wenn sie auch die dem Abruf der Messdaten zugrunde liegende Konfiguration empfängt und in der Protokolldatei speichert.

Insgesamt ist es vorteilhaft, wenn die Protokollierung des in der Testvorrichtung durchgeführten Verfahrens möglichst lückenlos erfolgt, um den Testvorgang später, falls nötig, analysieren oder mit anderen Testvorgängen vergleichen zu können.

Obwohl im vorliegenden Ausführungsbeispiel die Dokumentationseinheit 7 und die verschiedenen Protokolliereinheiten 9, 11, 13 als getrennte Einheiten dargestellt sind, können sie auch in Form einer einzigen Einheit realisiert sein. Insbesondere können die protokollierten Daten auch in eine einzige Protokolldatei geschrieben werden, die zudem beispielsweise an die Dokumentationsdatei angehängt oder in diese integriert werden kann.

Wie die Protokolleinheiten und die Dokumentiereinheit können auch die Speicher 51, 53, 55 als logische Unterteilungen eines einzigen physikalischen Speichers realisiert sein.

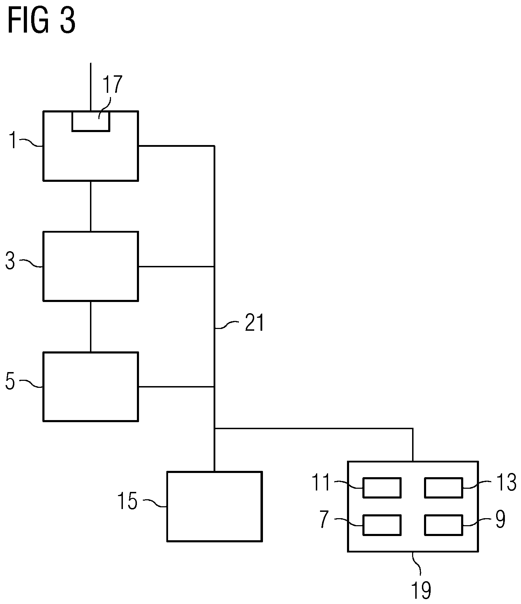

Eine Abwandlung der erfindungsgemäßen Vorrichtung ist in Figur 3 dargestellt. Elemente, die Elementen aus Figur 1 entsprechen, sind mit denselben Bezugsziffern wie in Figur 1 bezeichnet und werden nicht noch einmal erläutert, um unnötige Wiederholungen zu vermeiden. Es wird daher nur noch auf die Unterschiede der in Figur 3 dargestellten Testvorrichtung zu der in Figur 1 dargestellten Testvorrichtung eingegangen.

Im Unterschied zu der in Figur 1 dargestellten Testvorrichtung sind in der in Figur 3 dargestellten Testvorrichtung die Dokumentationseinheit 7 sowie alle Protokolliereinheiten 9, 11, 13 in eine gemeinsame Dokumentations-/Protokolliereinheit 19 integriert. Darüber hinaus ist ein Bus 21 vorhanden, der mit der Messdatenempfangseinheit 1, dem Messdatenkonverter 3, der Analyseeinheit 5, dem PC 15 und der Dokumentations- und Protokolliereinheit 19 verbunden ist. Alle Datenübertragungen zwischen den einzelnen Einheiten werden über diesen Bus 21 abgewickelt. Obwohl die Dokumentations- und Protokolliereinheit in Figur 3 als individuelle Einheit dargestellt ist, kann sie auch in den PC 15 in Form von Software integriert sein. Ebenso können auch die Messdatenerfassungseinheit, der Messdatenkonverter 3 und die Analyseeinheit 5 in Form von Software in den PC 15 integriert sein. Die Figuren 1 bis 3 stellen daher keine physikalischen Einheiten, sondern logische Einheiten dar.

Zur Erläuterung des erfindungsgemäßen Verfahrens werden nachfolgend mit Bezug auf Figur 4 die im Rahmen des Verfahrens zur Anwendung kommende automatische Prozesssteuerung und mit Bezug auf Figur 5 die in der Analyseeinheit 5 stattfindende Analyse beschrieben.

Im Rahmen der Prozesssteuerung wird in einem ersten Schritt 100 die Messdatenempfangseinheit 1 konfiguriert. Hierzu werden mittels des Bediencomputers 15 die IP-Adressen und die Benutzerdaten der Messsysteme, von denen Messdaten abgerufen werden sollen, eingegeben. Im nächsten Schritt 102 verbindet sich die Messdatenempfangseinheit 1 mit dem Steuerungssystem der Windturbinenanlage, um die Messung im Schritt 104 zu starten und in Schritt 106 die von den Messsystemen erfassten Messdaten zu empfangen. Im Rahmen eines Tests zum Durchfahren eines Spannungseinbruchs werden sowohl Messungen im Bereich niedriger Spannungen (LV, Low Voltage) als auch im Bereich mittlerer Spannungen (MV, Medium Voltage) vorgenommen. Zum Starten der Messung werden also Datensätze zum Starten der beiden Messungen an die Messsysteme des Steuerungssystems der Windturbinenanlage ausgegeben (Schritt 105). Die von den Messsystemen empfangenen Messdaten enthalten wiederum Daten für den niedrigen Spannungsbereich, im folgenden LV-Daten genannt, und Daten für den mittleren Spannungsbereich, im folgenden MV-Daten genannt, an den Messdatenkonverter 108 übertragen. Sowohl die LV-Daten als auch die MV-Daten werden darüber hinaus im vorliegenden Ausführungsbeispiel an den Bediencomputer 15 (Schritt 107a) und an die Messdatenprotokolliereinheit 13 übertragen (Schritt 107b), wo die Daten in ein Testplanprotokoll zusammen mit dem Datum, dem Dateinamen, der Testnummer, etc. eingetragen werden. Nach der Konvertierung der LV-Daten und MV-Daten in das standardisierte Datenformat (Schritt 108) werden die beiden erzeugten LV- und MV-Datensätze zu einem Datensatzpaar zusammengeführt (Schritt 110). Sowohl die einzelnen Datensätze als auch das Datensatzpaar werden an den Bediencomputer und/oder die Messdatensatzprotokolliereinheit 11 ausgegeben (Schritte 109 und 111). Von Schritt 110 kann die Prozesssteuerung dann zu Schritt 104 zurückspringen und eine erneute Messung von LV-Daten und MV-Daten starten.

Das vom Messdatenkonverter 3 generierte Messdatensatzpaar wird schließlich an die Analyseeinheit 5 ausgegeben, wo die Datensätze des Datensatzpaares analysiert werden. Das Analysieren wird nachfolgend anhand eines Ausführungsbeispiels mit Bezug auf Figur 5 näher erläutert.

Im ersten Schritt der Analyse 200 werden für die Analyse benötigt Parameter eingegeben. Diese Parameter können insbesondere Kanalnamen, Steigungen, Offsets, etc. umfassen. Nachdem diese Parameter eingegeben und in Schritt 202 in der Analyseeinheit 15 verarbeitet worden sind, erfolgt in Schritt 204 das Empfangen des Datensatzpaares aus dem dann in Schritt 206 die Werte bestimmter Größen berechnet werden. Diese Größen können insbesondere, jeweils getrennt für die LV-Daten und die MV-Daten, umfassen: verkettete Spannungen und Ströme, Effektivwerte der Spannungen und Ströme, Spannungen und Ströme im Mitsystem, im Gegensystem und im Nullsystem, K-Faktor. In Schritt 208 werden die berechneten Größen an die Protokolliereinheit 9 ausgegeben, wo sie in einer Protokolldatei gespeichert werden.

Nachdem die Werte für die bestimmten Größen in Schritt 206 berechnet worden sind, erfolgt in Schritt 210 ein Ausmessen der für die Bewertung benötigten Größen. Diese sind die Dauer des Spannungseinbruchs, die Tiefe des Spannungseinbruchs, sowohl im LV-Bereich als auch im MV-Bereich, die Dauer der Wirkleistungswiederkehr auf 90 % und auf 95 %, der Blindstrom im Tiefpunkt des Spannungseinbruches, die Wiederbereitschaftszeit ohne Blindstrom, die maximale Leistungsaufnahme während des Spannungseinbruchs, die Wirkleistung während des Spannungseinbruches sowie der K-Faktor. Darüber hinaus können den Status der Windturbinenanlage repräsentierende Größen ausgemessen werden. In Schritt 212 können die ausgemessenen Größen an die Protokolliereinheit 9 ausgegeben werden, wo sie in eine Protokolldatei eingetragen werden.

In Schritt 214 erfolgt eine Abfrage, ob die ausgemessenen Größen grafisch dargestellt werden sollen. Wenn ja, so erfolgt eine Ausgabe an den PC 15, wo dann eine grafische Darstellung erfolgen kann (Schritt 216). Anhand der grafischen Darstellung kann grundsätzlich eine manuelle Bewertung des Verhaltens der Windturbinenanlage während des Spannungseinbruches erfolgen. Im Rahmen des erfindungsgemäßen Verfahrens erfolgt aber eine automatisierte Bewertung der Größen (Schritt 218). Die Bewertung erfolgt auf der Basis eines Vergleiches der ausgemessenen Größen mit Vorgaben für das Verhalten dieser Größen während des Spannungseinbruchs, die beispielsweise aus grid codes 220 stammen können. Hinzu können weitere Vorgaben kommen, die beispielsweise vom Hersteller der Windturbinenanlage, vom Betreiber der Windturbinenanlage oder von einem Zertifizierer vorgegeben werden können. Diese Vorgaben 222 werden zusammen mit den aus den grid codes stammenden Vorgaben 220 mit den aus der Ausmessung im Schritt 210 gewonnenen Daten verglichen.

Die Bewertung erfolgt im vorliegenden Ausführungsbeispiel anhand einer Ampelanzeige, in der Grün für die Erfüllung der Vorgaben und Rot für die Nichterfüllung der Vorgaben steht. Die Farbe Gelb kann für eine Zwischenstufe reserviert sein, beispielsweise für eine Erfüllung der Vorgaben, die jedoch im Grenzbereich der zulässigen Werte liegt. Andere Möglichkeiten, das Bewertungsergebnis darzustellen, können beispielsweise Prozentangaben umfassen, die repräsentieren, wie weit die gemessenen Werte für die relevanten Größen von den Grenzen der zulässigen Bereiche entfernt sind. Eine weitere Möglichkeit der Darstellung besteht darin, in Form eines Notensystems das Bewertungsergebnis darzustellen, wobei die schlechteste Note das Nichterfüllen der Vorgaben angibt und die Beste Note das optimale Erfüllen der Vorgaben. Zwischennoten können dann bspw. für weniger optimales Erfüllen der Vorgaben repräsentieren, ohne dass die gemessenen Werte aus den zulässigen Wertebereichen herausfallen, vergeben werden.

Das Bewertungsergebnis wird in Schritt 224 an den PC 15 ausgegeben, wo das Bewertungsergebnis in Form der Ampeldarstellung oder einer anderen geeigneten Darstellung beispielsweise zusammen mit den wichtigsten Plots dargestellt wird. Falls vom Bewertungsergebnis ein Bericht erstellt werden soll (Schritt 226), erstellt die Analyseeinheit 5 in Schritt 228 einen Bericht, in dem das Bewertungsergebnis in einer standardisierten Form zur Ausgabe an die Dokumentationseinheit 7 (Schritt 230) bereit gestellt wird. Der Bericht kann optional auch zumindest auch die wichtigsten Plots und Tabellen umfassen. Danach ist die Analyse abgeschlossen (Schritt 232).

Mit dem beschriebenen erfindungsgemäßen Verfahren lässt sich das Testen einer Windturbinenanlage im Hinblick auf ihr Verhalten beim Durchfahren von Spannungseinbrüchen(Low Voltage Fault Ride Through) vollständig automatisieren. Dadurch kann der Aufwand für den Test verringert und die Reproduzierbarkeit erhöht werden. Der Test kann dabei entweder an einer einzelnen Windturbine oder einer Gruppe von Windturbinen, die gemeinsam an ein Netz angeschlossen sind, durchgeführt werden. Der Begriff Windturbinenanlage, wie er in der Beschreibung Verwendung findet, soll daher sowohl die einzelne Windturbine als auch eine Anzahl von gemeinsam an ein Netz angeschlossenen Windturbinen umfassen.

## Patentansprüche

1. Verfahren zum Testen einer Windturbinenanlage in Hinblick auf das Durchfahren eines Spannungseinbruchs, in dem ein Spannungseinbruch simuliert wird, anhand des simulierten Spannungseinbruches Messdaten über das Verhalten der Windturbinenanlage gewonnen werden und die gewonnenen Messdaten im Hinblick auf in Verhaltensvorgaben definierte Größen und deren zulässigen Werte analysiert werden, wobei die Messdaten zu einem Messdatensatz in einem standardisierten Messdatenformat zusammengefasst werden, der Messdatensatz an eine automatische Analyseeinheit (5) weitergegeben wird, in der Bewertungskriterien vorgehalten werden, und in der automatischen Analyseeinheit (5)
- aus den Messdaten Werte für die in den Verhaltensvorgaben definierten Größen abgeleitet werden,
- die aus den Messdaten abgeleiteten Werte der Größen mit den in den Verhaltensvorgaben enthaltenen zulässigen Werten verglichen werden,
- eine Bewertung des Vergleiches nach den vorgehaltenen Bewertungskriterien vorgenommen wird und
- das Ergebnis der Bewertung zur Ausgabe bereitgehalten wird.

2. Verfahren nach Anspruch 1, in dem die automatische Analyseeinheit (5) aus dem Messdatensatz Werte für zumindest eine der folgenden Größen ableitet: Dauer des Spannungseinbruchs, Tiefe des Spannungseinbruchs, Dauer der Wirkleistungswiederkehr auf 90%, Dauer der Wirkleistungswiederkehr auf 95%, Blindstrom im Spannungseinbruch, maximale Leistungsaufnahme, Wirkleistung während des Spannungseinbruchs, k-Faktor, ireactive recovertime.

3. Verfahren nach Anspruch 1 oder Anspruch 2, in dem die automatische Analyseeinheit (5) aus dem Messdatensatz den Status der Windturbinenanlage ableitet.

4. Verfahren nach einem der Ansprüche 1 bis 3, in dem anhand des Messdatensatzes außerdem automatisiert eine Dokumentationstabelle erstellt wird.

5. Testvorrichtung zum Testen einer Windturbinenanlage mit einem Steuersystem in Hinblick auf das Durchfahren eines Spannungseinbruchs, mit:
- einer Messdatenerfassungseinheit (1) mit einer Schnittsstelle (17) zum Anschluss an das Steuersystem der Windturbinenanlage und zum Erfassen von Messdaten des Steuerungssystems,
- einem mit der Messdatenerfassungseinheit (1) zum Empfang der erfassten Messdaten verbundnen Messdatenkonverter (3), der die erfassten Messdaten zu einem standardisierten Messdatensatz zusammenfasst, und
- einer mit dem Messdatenkonverter (3) zum Empfang des Messdatensatzes verbundene Analyseeinheit (5), die umfasst:
- einen Regelspeicher (51), in dem Berechnungsregeln für das Berechnen der Werte bestimmter Größen aus dem Messdatensatz abgelegt sind,
- einen Vorgabenspeicher (53), in dem für die bestimmten Größen zulässige Werte abgelegt sind,
- einen Kriterienspeicher (55), in dem Bewertungskriterien abgelegt sind,
- eine mit dem Messdatenkonverter (3) und den Regelspeicher (51) verbundene Berechnungseinheit (57), die aus dem Messdatensatz Werte für die bestimmten Größen ableitet,
- eine mit der Berechnungseinheit (57) und dem Vorgabespeicher (53) verbundene Vergleichseinheit (59), welche die für die bestimmten Größen abgeleiteten Werte mit den im Vorgabenspeicher (53) enthaltenen zulässigen Werten vergleicht,
- eine mit der Vergleichseinheit (59) und dem Kriterienspeicher (55) verbundene Bewertungseinheit (61), die eine Bewertung des Vergleiches nach den Bewertungskriterien vornimmt und das Ergebnis der Bewertung zur Ausgabe bereit hält.

6. Testvorrichtung nach Anspruch 5, welche außerdem eine mit der Analyseeinheit (5) zum Empfang der ausgegebenen Bewertung verbundene Darstellungseinheit (15) zur Darstellung der Bewertung umfasst.

7. Testvorrichtung nach Anspruch 5 oder Anspruch 6, die außerdem eine Dokumentationseinheit (7) aufweist, die mit der Analyseeinheit (5) zum Empfang der ausgegebenen Bewertung verbunden ist und die die empfangene Bewertung speichert.

8. Testvorrichtung nach einem der Ansprüche 5 bis 7, die außerdem eine Protokolliereinheit (9) aufweist, die mit der Analyseeinheit (5) zum Empfang der aus dem Messdatensatz abgeleiteten Größen verbunden ist und die die empfangenen Größen protokolliert.

9. Testvorrichtung nach einem der Ansprüche 5 bis 8, die außerdem eine Messdatenprotokolliereinheit (13) aufweist, die mit der Messdatenerfassungseinheit (1) zum Empfang der Messdaten verbunden ist und die die empfangenen Messdaten protokolliert.

10. Testvorrichtung nach einem der Ansprüche 5 bis 9, die außerdem eine Messdatensatzprotokolliereinheit (11) aufweist, die mit dem Messdatenkonverter (3) zum Empfang des Messdatensatzes verbunden ist und die den empfangenen Messdatensatz protokolliert.

## Claims

1. Method for testing a wind turbine installation in respect of riding through a voltage dip, in which a voltage dip is simulated, measured data on the performance of the wind turbine installation is obtained on the basis of the simulated voltage dip and the measured data obtained is analysed in respect of variables defined in performance requirements and their permitted values, wherein the measured data is combined to form a measured dataset in a standardised measured data format, the measured dataset is forwarded to an automatic analysis unit (5), in which evaluation criteria are stored, and wherein in the automatic analysis unit (5)
- values for the variables defined in the performance requirements are derived from the measured data,
- the values of the variables derived from the measured data are compared with the permitted values contained in the performance requirements,
- an evaluation of the comparison is performed in accordance with the stored evaluation criteria and
- the result of the evaluation is kept ready for output.

2. Method according to claim 1, in which the automatic analysis unit (5) derives values for at least one of the following variables from the measured dataset: duration of the voltage dip, depth of the voltage dip, time taken for active power to return to 90%, time taken for active power to return to 95%, reactive current in the voltage dip, maximum power consumption, active power during the voltage dip, k-factor, irreactive recover time.

3. Method according to claim 1 or claim 2, in which the automatic analysis unit (5) derives the status of the wind turbine installation from the measured dataset.

4. Method according to one of claims 1 to 3, in which a documentation table is generated, also automatically, on the basis of the measured dataset.

5. Test apparatus for testing a wind turbine installation with a control system in respect of riding through a voltage dip, having:
- a measured data capture unit (1) with an interface (17) for connection to the control system of the wind turbine installation and for capturing measured data from the control system,
- a measured data converter (3) connected to the measured data capture unit (1) in order to receive the captured measured data, which combines the captured measured data to form a standardised measured dataset, and
- an analysis unit (5) connected to the measured data converter (3) in order to receive the measured dataset, which comprises:
- a rule memory (51), in which calculation rules for calculating the values of particular variables from the measured dataset are stored,
- a requirements memory (53), in which permitted values for the particular variables are stored,
- a criteria memory (55), in which evaluation criteria are stored,
- a calculation unit (57) connected to the measured data converter (3) and the rule memory (51), which derives values for the particular variables from the measured dataset,
- a comparison unit (59) connected to the calculation unit (57) and the requirements memory (53), which compares the values derived for the particular variables with the permitted values contained in the requirements memory (53),
- an evaluation unit (61) connected to the comparison unit (59) and the criteria memory (55), which performs an evaluation of the comparison in accordance with the evaluation criteria and keeps the result of the evaluation ready for output.

6. Test apparatus according to claim 5, which also comprises a display unit (15) for displaying the evaluation, connected to the analysis unit (5) in order to receive the evaluation output.

7. Test apparatus according to claim 5 or claim 6, which also has a documentation unit (7), which is connected to the analysis unit (5) in order to receive the evaluation output and which saves the evaluation received.

8. Test apparatus according to one of claims 5 to 7, which also has a logging unit (9), which is connected to the analysis unit (5) in order to receive the variables derived from the measured dataset and which logs the variables received.

9. Test apparatus according to one of claims 5 to 8, which also has a measured data logging unit (13), which is connected to the measured data capture unit (1) in order to receive the measured data and which logs the measured data received.

10. Test apparatus according to one of claims 5 to 9, which also has a measured dataset logging unit (11), which is connected to the measured data converter (3) in order to receive the measured dataset and which logs the measured dataset received.

## Revendications

1. Procédé en vue du test d'une installation éolienne par rapport au passage d'une chute de tension, dans lequel une chute de tension est simulée, à l'aide de la chute de tension simulée des données de mesure sont obtenues par le biais du comportement de l'installation éolienne et les données de mesure obtenues sont analysées par rapport à des grandeurs définies dans des objectifs de comportement et aux valeurs admissibles de celles-ci, dans lequel les données de mesure sont regroupées dans un ensemble de données de mesure selon un format de données de mesure standardisé, l'ensemble de données de mesure est transmis à une unité d'analyse automatique (5), dans laquelle des critères d'évaluation sont respectés, et dans l'unité d'analyse automatique (5)
- à partir des données de mesure des valeurs pour les grandeurs définies dans les objectifs de comportement sont déduites,
- les valeurs déduites à partir des données de mesure pour les grandeurs sont comparées avec les valeurs admissibles contenues dans les objectifs de comportement,
- une évaluation de la comparaison est effectuée selon les critères d'évaluation respectés et
- le résultat de l'évaluation est tenu prêt en vue d'une diffusion.

2. Procédé selon la revendication 1, dans lequel l'unité d'analyse automatique (5) déduit à partir de l'ensemble de données de mesure des valeurs pour au moins une des grandeurs suivantes : durée de la chute de tension, amplitude de la chute de tension, durée du retour de la puissance active à 90 %, durée du retour de la puissance active à 95 %, courant réactif dans la chute de tension, puissance absorbée maximale, puissance active pendant la chute de tension, facteur k, temps de rétablissement non réactif.

3. Procédé selon la revendication 1 ou la revendication 2, dans lequel l'unité d'analyse automatique (5) déduit le statut de l'installation éolienne à partir de l'ensemble de données de mesure.

4. Procédé selon l'une des revendications 1 à 3, dans lequel à l'aide de l'ensemble de données de mesure une table de documentations est en outre générée de manière automatique.

5. Dispositif de test en vue du test d'une installation éolienne avec un système de commande par rapport au passage d'une chute de tension, avec :
- une unité d'acquisition de données de mesure (1) avec une interface (17) en vue du raccordement au système de commande de l'installation éolienne et en vue de l'acquisition de données de mesure du système de commande,
- un convertisseur de données de mesure (3) relié à l'unité d'acquisition de données de mesure (1) en vue de la réception des données de mesure acquises, lequel convertisseur regroupe les données de mesure acquises au sein d'un ensemble de données de mesure standardisé, et
- une unité d'analyse (5) reliée au convertisseur de données de mesure (3) en vue de la réception de l'ensemble de données de mesure, laquelle unité d'analyse comprend :
- une mémoire de règles (51), dans laquelle des règles de calcul pour le calcul des valeurs de grandeurs déterminées à partir de l'ensemble de données de mesure sont déposées,
- une mémoire d'objectifs (53), dans laquelle des données admissibles pour les grandeurs déterminées sont déposées,
- une mémoire de critères (55), dans laquelle des critères d'évaluation sont déposés,
- une unité de calcul (57) reliée au convertisseur de données de mesure (3) et à la mémoire de règles (51), qui déduit des valeurs pour les grandeurs déterminées à partir des données de mesure,
- une unité de comparaison (59) reliée à l'unité de calcul (57) et à la mémoire d'objectifs (53), qui compare les valeurs déduites pour les grandeurs déterminées aux valeurs admissibles contenues dans la mémoire d'objectifs (53),
- une unité d'évaluation (61) reliée à l'unité de comparaison (59) et à la mémoire de critères (55), qui effectue une évaluation de la comparaison selon les critères d'évaluation et tient prêt le résultat de l'évaluation en vue d'une diffusion.

6. Dispositif de test selon la revendication 5, qui comprend en outre une unité de présentation (15) reliée à l'unité d'analyse (5) en vue de la réception de l'évaluation diffusée en vue de la présentation de l'évaluation.

7. Dispositif de test selon la revendication 5 ou la revendication 6, qui présente en outre une unité de documentation (7) qui est reliée à l'unité d'analyse (5) en vue de la réception de l'évaluation diffusée et met en mémoire l'évaluation reçue.

8. Dispositif de test selon l'une des revendications 5 à 7, qui présente en outre une unité de journalisation (9) qui est reliée à l'unité d'analyse (5) en vue de la réception des grandeurs déduites à partir de l'ensemble de données de mesure et qui journalise les grandeurs reçues.

9. Dispositif de test selon l'une des revendications 5 à 8, qui présente en outre une unité de journalisation de données de mesure (13) qui est reliée à l'unité d'acquisition de données de mesure (1) en vue de la réception des données de mesure et qui journalise les données de mesure reçues.

10. Dispositif de test selon l'une des revendications 5 à 9, qui présente en outre une unité de journalisation d'ensemble de données de mesure (11) qui est reliée au convertisseur de données de mesure (3) en vue de la réception de l'ensemble de données de mesure et qui journalise l'ensemble de données de mesure reçu.
